# EUROPEAN PATENT APPLICATION

(11) **EP 4 503 549 A1**
(43) Date of publication of application: **05.02.2025**
(21) Application number: 23779601.6
(22) Date of filing: 15.03.2023
(51) Int. Cl.: H04L 43/0823, F24F 11/38, H04L 41/0631, H04Q 9/00

(54) **ABNORMALITY IDENTIFICATION DEVICE, ABNORMALITY IDENTIFICATION METHOD, AND PROGRAM**

(30) Priority: 31.03.2022 JP 2022060523
(71) Applicant: DAIKIN INDUSTRIES, LTD., Osaka-shi, Osaka 530-0001 (JP)
(72) Inventor: TOMINAGA, Jun, Osaka-Shi, Osaka 530-0001 (JP)
(74) Representative: Hoffmann Eitle
(86) International application number: PCT/JP2023/010008
(87) International publication number: WO 2023/189583

(57) **Abstract**

Accuracy of identifying a communication anomaly is improved in a communication system. An anomaly identification apparatus includes a control unit monitoring communication that facility devices perform. The control is configured to acquire, for each of the facility devices, communication frequency information representing a communication frequency, and estimating an onset location of a communication anomaly among the facility devices according to a pattern of the communication frequency.

## Description

### Technical Field

The present disclosure relates to an anomaly identification apparatus, an anomaly identification method, and a program.

### Background Art

There is a technique of monitoring communication anomalies in a communication system, in which multiple facility devices are connected via communication lines. For example, Patent Document 1 discloses an invention in which a facility device causing a communication anomaly is identified based on a change in communication frequency of the facility device in an air conditioning system in which multiple facility devices are connected via communication lines.

### Citation List

### Patent Document

Patent Document 1: Japanese Unexamined Patent Application Publication No. 2020-120324

### Summary of Invention

### Technical Problem

However, the invention disclosed in Patent Document 1 identifies all facility devices with a reduced communication frequency as onset locations of a communication anomaly without distinguishing between them, and therefore has a problem such that accuracy of identifying an onset location is low.

The present disclosure improves accuracy of identifying an onset location of a communication anomaly in a communication system.

### Solution to Problem

An anomaly identification apparatus according to a first embodiment of the present disclosure includes a control unit monitoring communication that facility devices perform. The control unit is configured to acquire, for each of the facility devices, communication frequency information representing a communication frequency, and estimate an onset location of a communication anomaly among the facility devices according to a pattern of the communication frequency.

According to the first embodiment of the present disclosure, accuracy of identifying an onset location of a communication anomaly in a communication system can be improved.

A second embodiment of the present disclosure is the anomaly identification apparatus according to the first embodiment, in which the communication frequency information includes a number of times the communication has succeeded, a number of times the communication has failed, or a number of times the communication has been retransmitted.

A third embodiment of the present disclosure is the anomaly identification apparatus according to the first embodiment, in which the control unit is configured to determine, for each of the facility devices, the communication anomaly according to a degree of change in the communication frequency, and estimate the onset location according to the pattern of the facility device at which the communication anomaly has occurred.

A fourth embodiment of the present disclosure is the anomaly identification apparatus according to the third embodiment, in which the control unit is configured to determine the communication anomaly based on the degree of change in the communication frequency and a duration of the change in the communication frequency.

A fifth embodiment of the present disclosure is the anomaly identification apparatus of the third embodiment, in which the control unit is configured to determine the communication anomaly based on an occurrence frequency of the communication anomaly.

A sixth embodiment of the present disclosure is the anomaly identification apparatus according to the first embodiment that further includes a storage unit that stores wiring information of the facility devices, in which the control unit is configured to estimate the onset location based on the wiring information.

A seventh embodiment of the present disclosure is the anomaly identification apparatus according to the first embodiment, in which the control unit is configured to acquire, for each of the facility devices, supply information of a power supply, and estimate the onset location based on the supply information.

An eighth embodiment of the present disclosure is the anomaly identification apparatus of the seventh embodiment, in which the supply information includes information regarding power loss.

A ninth embodiment of the present disclosure is the anomaly identification apparatus according to the first embodiment, in which the control unit is configured to acquire drawing information regarding construction of a site where the facility devices are installed, and estimate the onset location based on the drawing information.

A tenth embodiment of the present disclosure is the anomaly identification apparatus according to the first embodiment that further includes a display unit that displays a name of the onset location, identification information of the onset location, drawing information, in which the onset location is displayed prominently, or communication frequency information.

An eleventh embodiment of the present disclosure is the anomaly identification apparatus according to the first embodiment, in which one of the facility devices communicates with another one of the facility devices at set cycles.

A twelfth embodiment of the present disclosure is the anomaly identification apparatus according to the first embodiment, in which the facility devices include one or more facility devices that cannot directly communicate with the anomaly identification apparatus.

A thirteenth embodiment of the present disclosure is the anomaly identification apparatus according to the first embodiment, in which the onset location in an air conditioning system is estimated, the air conditioning system includes an air conditioner and a monitoring device monitoring the air conditioner, and the air conditioner includes one or more outdoor units and one or more indoor units.

A fourteenth embodiment of the present disclosure is the anomaly identification apparatus according to the thirteenth embodiment, in which the control unit is configured to estimate the onset location in wiring connecting the one or more outdoor units, the one or more indoor units, and the monitoring device.

A fifteenth embodiment of the present disclosure is the anomaly identification apparatus according to the fourteenth embodiment, in which the one or more indoor units cannot directly communicate with the anomaly identification apparatus.

A sixteenth embodiment of the present disclosure is the anomaly identification apparatus according to the thirteenth embodiment that further includes a storage unit that stores system information of the one or more outdoor units and the one or more indoor units, in which the onset location is estimated based on the system information.

A seventeenth embodiment of the present disclosure is the anomaly identification apparatus according to the thirteenth embodiment, in which the communication frequency information represents the communication frequency between the one or more outdoor units and the one or more indoor units.

An eighteenth embodiment of the present disclosure is the anomaly identification apparatus according to the thirteenth embodiment, in which the communication frequency information represents the communication frequency between the one or more outdoor units and the monitoring device.

An anomaly identification method according to a nineteenth embodiment of the present disclosure includes causing a control unit, which is included in an anomaly identification apparatus and monitors communication that facility devices perform, to execute a process of acquiring, for each of the facility devices, communication frequency information representing a communication frequency, and a process of estimating an onset location of a communication anomaly among the facility devices according to a pattern of the communication frequency.

A program according to a twentieth embodiment of the present disclosure is for causing a control unit, which is included in an anomaly identification apparatus and monitors communication that facility devices perform, to execute a process of acquiring, for each of the facility devices, communication frequency information representing a communication frequency, and a process of estimating an onset location of a communication anomaly among the facility devices according to a pattern of the communication frequency.

### Brief Description of Drawings

[Fig. 1] Fig. 1 is a block diagram illustrating a first example of an overall configuration of an air conditioning system.
[Fig. 2] Fig. 2 is a block diagram illustrating a second example of the overall configuration of the air conditioning system.
[Fig. 3] Fig. 3 is a block diagram illustrating a third example of the overall configuration of the air conditioning system.
[Fig. 4] Fig. 4 is a conceptual diagram for explaining a relationship among facility devices.
[Fig. 5] Fig. 5 is a block diagram illustrating an example of a hardware configuration of the anomaly identification apparatus.
[Fig. 6] Fig. 6 is a flowchart illustrating a process flow of the anomaly identification method.
[Fig. 7] Fig. 7 is a diagram illustrating an example of communication frequency information.
[Fig. 8] Fig. 8 is a flowchart illustrating a flow of a communication anomaly determination process.
[Fig. 9] Fig. 9 is a conceptual diagram illustrating an example of a change in communication frequency.
[Fig. 10] Fig. 10 is a flowchart illustrating a flow of an onset location identification process.
[Fig. 11] Fig. 11 is a conceptual diagram illustrating an example of virtual wiring.
[Fig. 12] Fig. 12(A) is a conceptual diagram illustrating an example of a communication anomaly pattern when a communication anomaly occurs at one child node. Fig. 12(B) is a conceptual diagram illustrating an example of a communication anomaly pattern when a communication anomaly occurs at multiple child nodes. Fig. 12(C) is a conceptual diagram illustrating an example of a communication anomaly pattern when a communication anomaly occurs at a parent node and all of child nodes.

### Description of Embodiments

Hereinafter, each of embodiments will be described with reference to the accompanying drawings. In the present specification and drawings, components having substantially the same functional configuration are denoted by the same reference numerals, and redundant description thereof will be omitted.

### [First Embodiment]

### <System configuration>

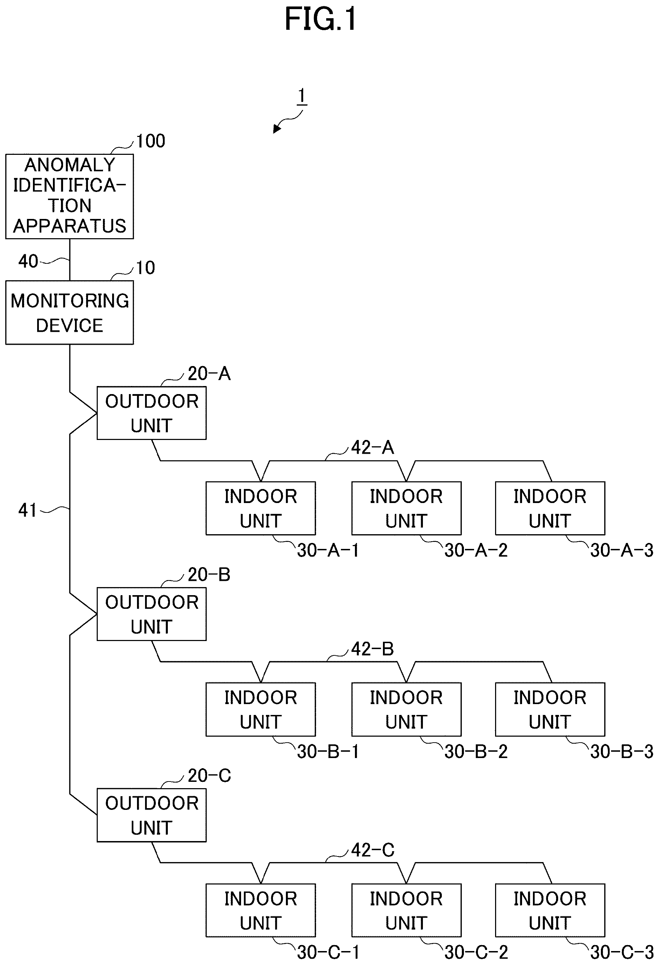

Fig. 1 is a block diagram illustrating an example of a system configuration of an air conditioning system according to the present embodiment. As illustrated in Fig. 1, the air conditioning system 1 includes an anomaly identification apparatus 100, a monitoring device 10, one or more outdoor units 20, and one or more indoor units 30. Hereinafter, the monitoring device 10, the outdoor unit(s) 20, and the indoor unit(s) 30 may be referred to as "facility device(s)" without being distinguished.

The air conditioning system is an example of a communication system. The facility devices that perform communication in the communication system may be, for example, facility devices of lighting equipment, of lifting machines, such as elevators, of office automation (OA) equipment, or the like.

The anomaly identification apparatus 100 is an information processing device, such as a personal computer (PC), a workstation, a server, or the like that monitors communication of each of the facility devices included in the air conditioning system 1 and identifies an onset location of a communication anomaly. The anomaly identification apparatus 100 executes the below-described anomaly identification method, thereby identifying an onset location of a communication anomaly in the air conditioning system 1.

The monitoring device 10 is a facility device that manages the one or more outdoor units 20 and the one or more indoor units 30. The monitoring device 10 receives signals. The signals are periodically transmitted by the one or more outdoor units 20 and the one or more indoor units 30 and represent a current state. The monitoring device 10 transmits a signal representing an operation command to the one or more outdoor units 20 and the one or more indoor units 30 in response to operation of a user.

The one or more outdoor units 20 and the one or more indoor unit 30 are facility devices installed in a facility, such as a building, to perform air conditioning of a predetermined indoor space including one or more rooms. Each outdoor unit 20 is, for example, an outdoor unit of an air conditioning device (also referred to as an "air conditioner" hereinafter). Each indoor unit 30 is, for example, an indoor unit of an air conditioning device. The one or more outdoor units 20 and the one or more indoor units 30 are connected via refrigerant pipes (not illustrated).

The anomaly identification apparatus 100 is connected to the monitoring device 10 via a communication line 40. The monitoring device 10 is connected to each of the outdoor units 20 via a communication line 41. Each outdoor unit 20 is connected to one or more indoor units 30 via communication lines 42. The anomaly identification apparatus 100 is configured so that the anomaly identification apparatus 100 can communicate only with the monitoring device 10, and not with the outdoor units 20 and the indoor units 30.

The system configuration of the air conditioning system illustrated in Fig. 1 is an example, and another configuration may be used. For example, the anomaly identification apparatus 100 may be configured as one image processing device that also has functions to be provided in the monitoring device 10.

### <<Wiring configuration between facility devices>>

The communication wiring between the facility devices may take various configurations. Fig. 1 is a block diagram illustrating a first wiring example between the facility devices. In the first wiring example, as illustrated in Fig. 1, the facility devices are connected to one another by bus wiring.

In the first wiring example, the outdoor units 20-A to 20-C are connected in series to the monitoring device 10 via communication lines 41. The indoor units 30-A-1 to 30-A-3 are connected in series to the outdoor unit 20-A via communication lines 42-A. In a similar manner, the indoor units 30-B-1 to 30-B-3 are connected in series to the outdoor unit 20-B via communication lines 42-B, and the indoor units 30-C-1 to 30-C-3 are connected in series to the outdoor unit 20-C via communication lines 42-C.

In the air conditioning system 1, the number of the outdoor units 20 is not limited. Moreover, the number of the indoor units 30 to be connected to each outdoor unit 20 is not limited. Any number of outdoor units 20 can be installed according to circumstances of the facility in which the air conditioning system 1 is installed. Moreover, any number of the indoor units 30 can be connected to each outdoor unit 20 within a processing capacity of each outdoor unit 20.

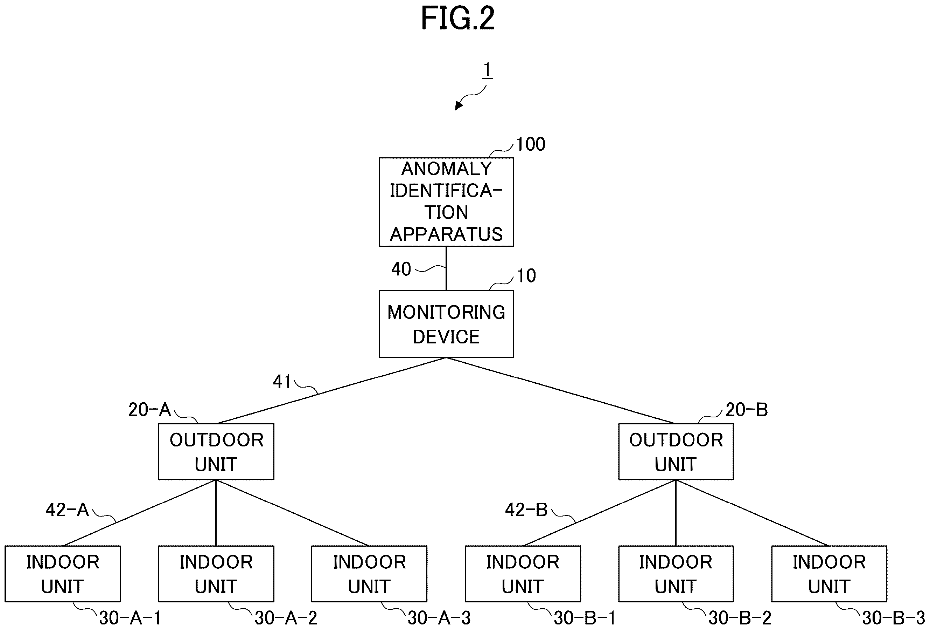

Fig. 2 is a block diagram illustrating a second wiring example between the facility devices. In the second wiring example, as illustrated in Fig. 2, the facility devices are connected to one another by star wiring.

In the second wiring example, the outdoor units 20-A to 20-C are connected in parallel to the monitoring device 10 via communication lines 41. The indoor units 30-A-1 to 30-A-3 are connected in parallel to the outdoor unit 20-A via communication lines 42-A. In similar manner, the indoor units 30-B-1 to 30-B-3 are connected in parallel to the outdoor unit 20-B via communication lines 42-B.

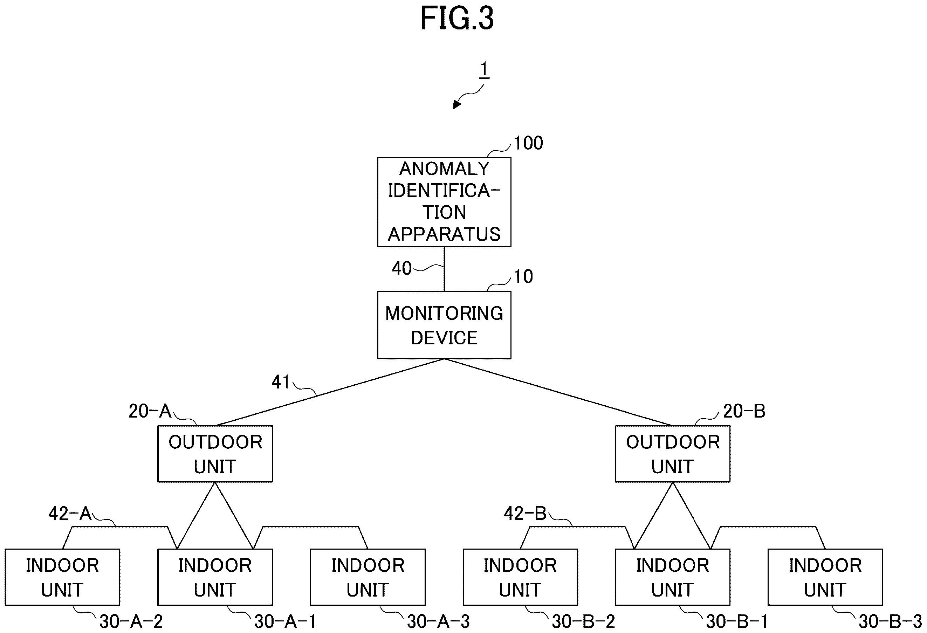

Fig. 3 is a block diagram illustrating a third wiring examples between the facility devices. In the third wiring example, as illustrated in Fig. 3, the monitoring device 10 and the outdoor units 20 are connected by star wiring, and each outdoor unit 20 and the indoor units 30 are connected by bus wiring.

In the third wiring example, the outdoor units 20-A to 20-C are connected in parallel to the monitoring device 10 via communication lines 41. The indoor units 30-A-1 to 30-A-3 are connected in series to the outdoor unit 20-A via communication lines 42-A. In a similar manner, the indoor units 30-B-1 to 30-B-3 are connected in series to the outdoor unit 20-B via communication lines 42-B.

Hereinafter, the air conditioning system 1, in which the facility devices are connected to one another by bus wiring, will be described. However, the present embodiment can be similarly applied to an air conditioning system 1 that is connected by another wiring configuration.

### <<Relationship among facility devices>>

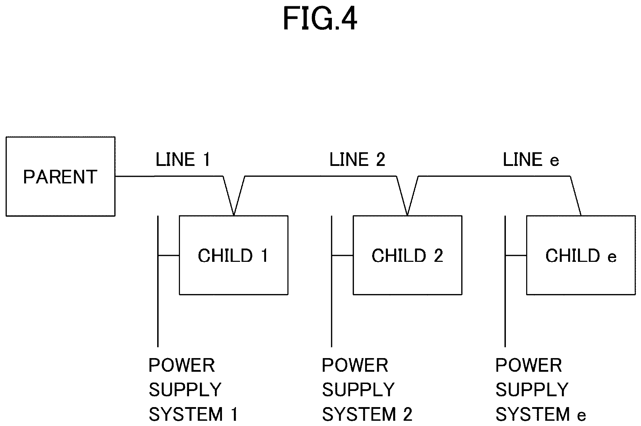

Terminologies for representing a relationship among facility device will be described. Fig. 4 is a conceptual diagram for explaining a relationship among the facility devices.

As described with reference to Figs. 1 to 3, a communication pathway among the facility devices in the air conditioning system 1 is formed in a tree shape. A flow from the anomaly identification apparatus 100 to the indoor unit 30 via the monitoring device 10 and the outdoor unit 20 is referred to as a flow from "upstream" to "downstream." For example, between the monitoring device 10 and the outdoor unit 20, the monitoring device 10 is on the upstream side, and the outdoor unit 20 is on the downstream side.

In the case where there is a relationship of upstream and downstream among the facility devices, such relationship is referred to as a "parent-child" relationship. For example, between the monitoring device 10 and the outdoor unit 20, the monitoring device 10 is a parent node, and the outdoor unit 20 is a child node. A group of facility devices having the parent-child relationship is referred to as a "system."

Fig. 4 is a diagram illustrating an example of a system. As illustrated in Fig. 4, in one system, there is one parent node, and there may be two or more child nodes. The number of lines between the facility devices is the same number as the number of the child nodes. Power supply systems are connected in a manner such that the child nodes are assigned to different power supply systems, respectively. Therefore, the number of the power supply systems is the same number as the number of the child nodes. In this case, branch numbers are assigned to the child nodes, the lines, and the power supply systems in ascending order from the upstream to the downstream. The branch number of the terminal in each system is "e."

### <Configuration of hardware>

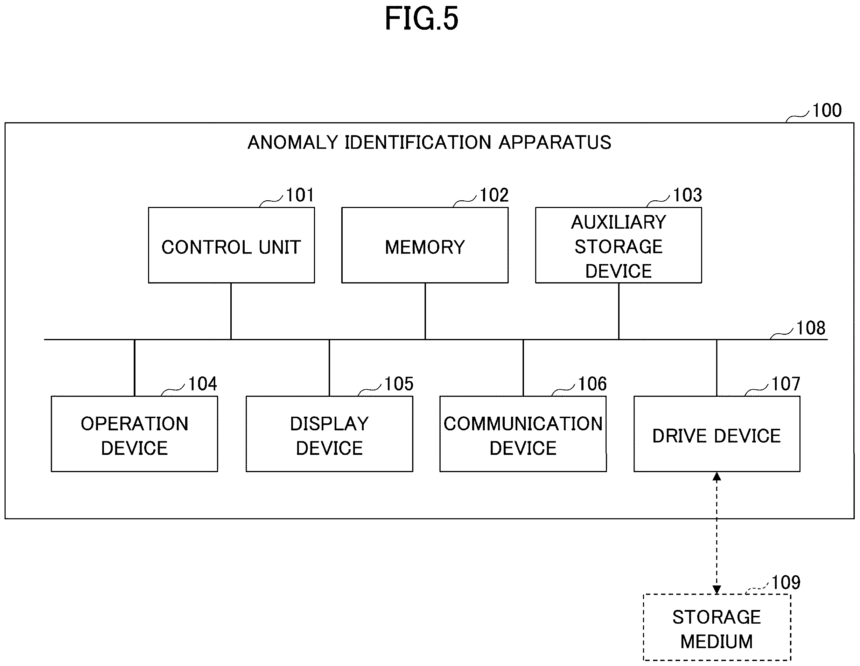

Fig. 5 is a block diagram illustrating an example of a hardware configuration of the anomaly identification apparatus 100 according to the present embodiment. As illustrated in Fig. 5, the anomaly identification apparatus 100 includes a processor 101, a memory 102, an auxiliary storage device 103, an operation device 104, a display device 105, a communication device 106, and a drive device 107. The hardware devices of the anomaly identification apparatus 100 are connected to one another via a bus 108.

The processor 101 includes various computing devices, such as a central processing unit (CPU), and the like. The processor 101 reads various programs installed in the auxiliary storage device 103 onto the memory 102 and executes the programs.

The memory 102 includes a main storage device, such as a read only memory (ROM), a random access memory (RAM), and the like. The processor 101 and the memory 102 constitute what is known as a computer (may be referred to as a "control unit" hereinafter). Various functions of the computer are implemented by causing the processor 101 to execute various programs read on the memory 102.

The auxiliary storage device 103 stores various programs, or a variety of data used when the processor 101 executes various programs.

The operation device 104 is a control device for a user of the anomaly identification apparatus 100 to perform a variety of operation. The display device 105 is a display device that displays results of various processes executed by the anomaly identification apparatus 100.

The communication device 106 is a communication device for performing communication with an external device via a network (not illustrated).

The drive device 107 is a device for setting a storage medium 109. The storage medium 109 includes a medium that optically, electrically, or magnetically store information, such as a CD-ROM, a flexible disk, a magneto-optical disk, or the like. Moreover, the storage medium 109 may include a semiconductor memory that electrically stores information, such as a ROM, a flash memory, or the like.

Note that, various programs installed in the auxiliary storage device 103 may be installed, for example, by setting a provided storage medium 109 in the drive device 107, and reading various programs stored in the storage medium 109 by the drive device 107. Alternatively, various programs installed in the auxiliary storage device 103 may be installed by downloading the various programs from the network via the communication device 106.

### <Process flow>

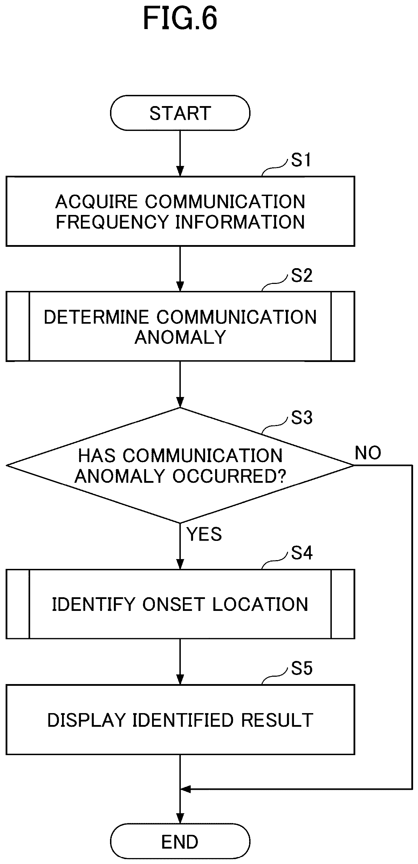

Fig. 6 is a flowchart illustrating an example of a process flow of the anomaly identification method according to the present embodiment.

At step S1, a control unit of an anomaly identification apparatus 100 acquires, from a monitoring device 10, communication frequency information among facility devices. The communication frequency information is information regarding communication occurred per unit time. The communication frequency information includes the number of times the communication has succeeded, the number of times the communication has failed, and the number of times the communication has been retransmitted.

The monitoring device 10 periodically communicates with one or more outdoor units 20 and one or more indoor units 30. In the case where the air conditioning system 1 is configured by bus wiring, the indoor unit 30 communicates with the monitoring device 10 via the outdoor unit 20. The intervals for performing communication can be arbitrarily determined, and for example, the communication is performed 60 times per hour.

The communication frequency information includes a communication frequency between the monitoring device 10 and the one or more outdoor units 20, and a communication frequency between the monitoring device 10 and the one or more indoor units 30. The communication frequency information may include a communication frequency between the outdoor unit 20 and the one or more indoor unit 30.

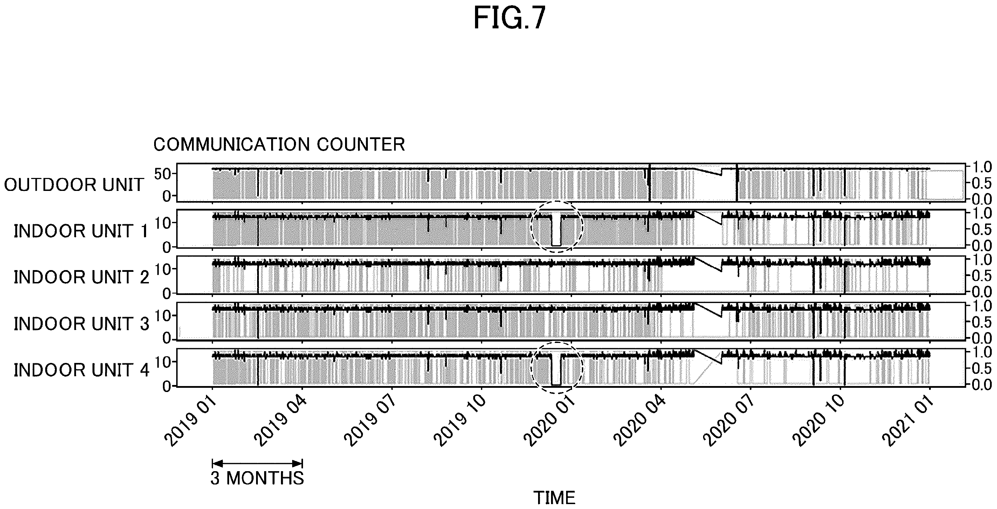

Fig. 7 is a diagram illustrating an example of the communication frequency information. The communication frequency information depicted in Fig. 7 is a graph depicting time lapse of the communication frequency information of each of the outdoor unit 20 and the four indoor units 30 connected by bus wiring. The graph depicted in Fig. 7 presents the communication frequency information for the duration of two years.

As depicted in Fig. 7, each facility device periodically performs communication, but there may be a case where a communication frequency is temporarily reduced. The temporal reduction in communication frequency with a short duration could occur even in normal operation, and therefore can be ignored. Conversely, there is a case where a communication frequency is reduced continuously over a certain period as in the section of Fig. 7 surrounded by a dashed-line circle. The reduction in the communication frequency with a long duration can be determined as occurrence of some kind of an anomaly, or a sign of occurrence of an anomaly.

The description will be made with referring back to Fig. 6. At step S2, the control unit of the anomaly identification apparatus 100 determines whether or not a communication anomality has occurred at any of the facility devices. The control unit executes the below-described communication anomaly determination process to determine whether or not a communication anomaly has occurred.

### <<Communication anomaly determination process>>

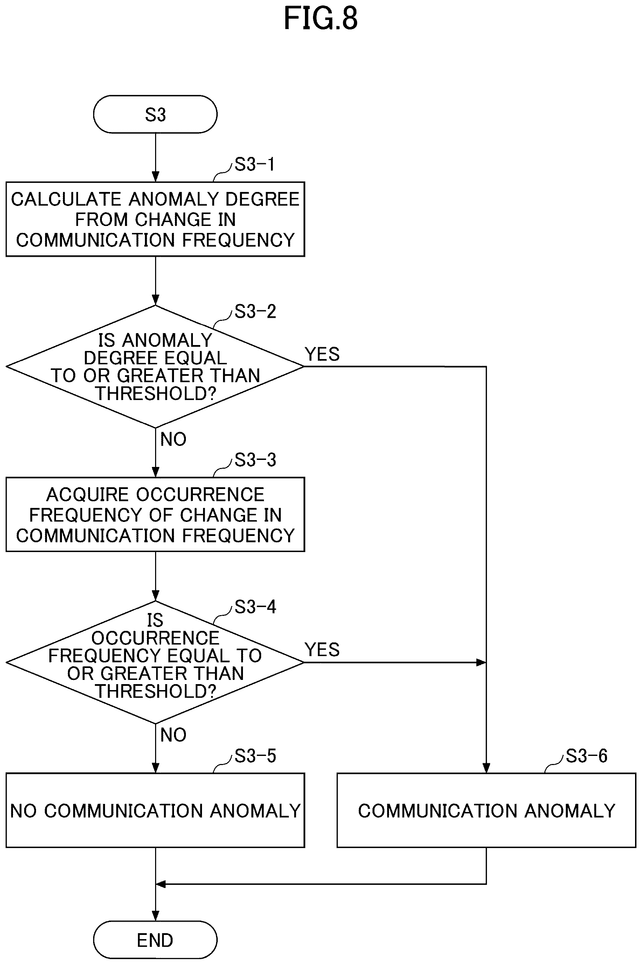

Fig. 8 is a flowchart illustrating an example of a flow of the communication anomaly determination process (step S3 in Fig. 6) in the present embodiment. The communication anomaly determination process illustrated in Fig. 8 is a flowchart illustrating a process flow for determining a communication anomaly at one facility device. Accordingly, the communication anomaly determination process is repeatedly executed by the number of facility devices.

At step S3-1, the control unit of the anomaly identification apparatus 100 calculates an anomaly degree of the facility device based on the communication frequency information of the facility device.

The anomaly degree is calculated based on a degree of a change in communication frequency and a duration of the change in communication frequency. The degree of the change in communication frequency is a ratio of a measurement amount of the communication frequency to a theoretical value of the communication frequency. In the present embodiment, each facility device performs communication 60 times per hour, and therefore a value indicating the degree of the change is a value obtained by dividing the measurement amount of the communication frequency per hour, which is represented in the communication frequency information, by 60.

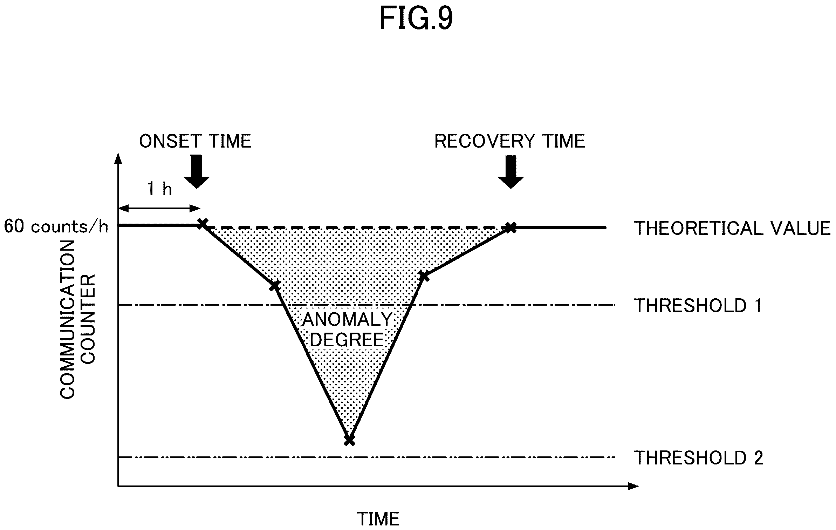

Fig. 9 is a diagram illustrating an example of the change in communication frequency. As depicted in Fig. 9, an anomaly degree is an area of a portion where a communication frequency deviates from a theoretical value when a time-lapse of the degree of the change in communication frequency is represented with a line graph.

The control unit calculates an anomaly degree when a reduction width of the largest reduction in communication frequency in a time period, during which a reduction in communication frequency has occurred (from an onset time to a recovery time in Fig. 9), is within a set range. Specifically, a threshold 1 representing the lower limit of the reduction width and a threshold 2 representing an upper limit of the reduction width are set in the control unit. The control unit determines whether or not there is a point of time at which the reduction width is equal to or greater than the threshold 1 and equal to or less than the threshold 2 within the time period when the reduction in communication frequency has occurred. The control unit calculates an anomaly degree when the reduction width is equal to or greater than the threshold 1 and equal to or less than the threshold 2.

Since a communication frequency between facility devices varies even during normal operation, all of reductions in communication frequency should not be determined as a communication anomaly, unless a reduction with a set width occurs. In the case where the reduction width of the communication frequency is excessively large, it is highly possible that a communication anomaly is caused by other factors, such as a failure of a power supply, or the like. Therefore, thresholds respectively defining an upper limit and lower limit of a reduction width are set, and an anomaly degree is calculated when a reduction width of a communication frequency is within the set range.

The description will be made with referring back to Fig. 8. At step S3-2, the control unit of the anomaly identification apparatus 100 determines whether or not the anomaly degree calculated at step S3-1 is equal to or greater than the set threshold. In the case where the anomaly degree is equal to or greater than the threshold (YES), the control unit advances the process to step S3-6. In the case where the anomaly degree is less than the threshold (NO), the control unit advances the process to step S3-3.

At step S3-3, the control unit of the anomaly identification apparatus 100 calculates an occurrence frequency of a change in communication frequency of the facility device based on the communication frequency information of the facility device.

The occurrence frequency of the change in communication frequency is the number of times the reduction in communication frequency occurs in a set time period. The reduction in communication frequency is calculated by counting, as one, a change from the point at which the measurement value of the communication frequency is reduced from the theoretical value to the point at which the measurement value is returned back to the theoretical value.

If the reduction in communication frequency occurs one time, it is highly likely that the reduction is accidental. A cause of the accidental reduction may be, for example, a resource shortage of the facility device in operation, noise of the communication pathway, or the like. If the reduction in communication frequency occurs periodically, it is highly likely that a communication anomaly has occurred. Therefore, a communication anomaly is determined as occurring when an occurrence frequency of the reduction in communication frequency is high in a set time period.

At step S3-4, the control unit of the anomaly identification apparatus 100 determines whether or not the occurrence frequency of the change in communication frequency, which has been calculated at step S3-3, is equal to or greater than the set threshold. In the case where the occurrence frequency of the change in communication frequency is equal to or greater than the threshold (YES), the control unit advances the process to step S3-6. In the case where the occurrence frequency of the change in communication frequency is less than the threshold (NO), the control unit advances the process to step S3-5.

At step S3-5, the control unit of the anomaly identification apparatus 100 determines that a communication anomality has not occurred at the facility device.

At step S3-6, the control unit of the anomaly identification apparatus 100 determines that a communication anomaly has occurred at the facility device.

In the communication anomaly determination process illustrated in Fig. 8, the example where determination based on the anomaly degree at step S3-2 and determination based on the occurrence frequency at step S3-4 are performed is described, but only one of the above determinations may be executed. In the case where only the determination based on the anomaly degree is performed, for example, steps S3-3 and S3-4 are omitted. In the case where only the determination based on the occurrence frequency is performed, for example, steps S3-1 and S3-2 are omitted.

In the above, the case where the communication frequency is reduced from the theoretical value has been described, but determination can be similarly performed in a case where a communication frequency exceeds the theoretical value. For example, when communication between facility devices becomes unstable and retransmission is often performed or the like, it is highly possible that the communication frequency will exceed the theoretical value.

The description will be made with referring back to Fig. 6. At step S3, in the case where there is the facility device at which a communication anomaly has occurred (YES), the control unit of the anomaly identification apparatus 100 advances the process to step S4. In the case where there is no facility device at which a communication anomaly has occurred (NO), the control unit ends the process of the anomaly identification method.

At step S4, the control unit of the anomaly identification apparatus 100 determines an onset location of the communication anomaly based on a communication anomaly pattern for all of the facility devices. The communication anomaly pattern is a pattern representing the entire communication frequency information of all of the facility devices. A communication anomaly of each of the facility devices is determined based on the communication frequency information, and therefore the communication anomaly pattern can be regarded as information representing a collection of the facility devices at which a communication anomaly has occurred among the facility devices included in the air conditioning system 1. The control unit executes the below-described onset location identification process to determine an onset location of a communication anomaly.

### <<Onset location identification process>>

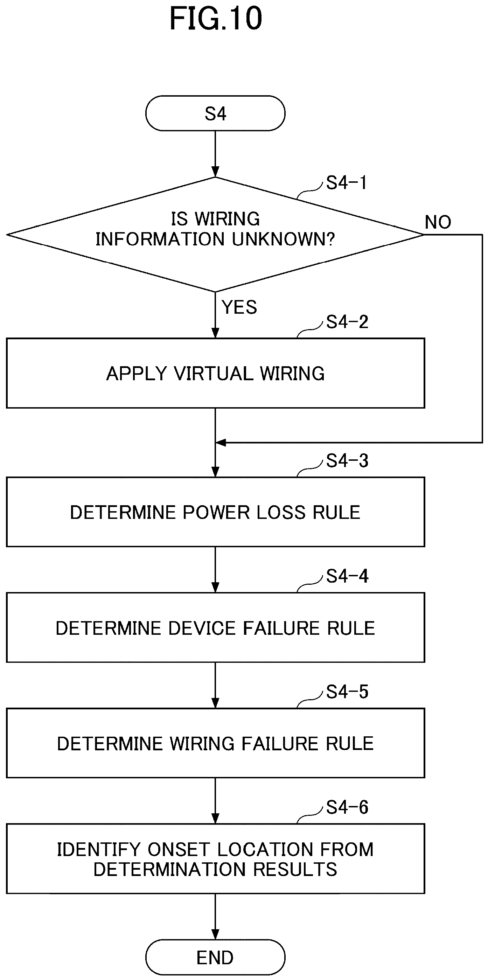

Fig. 10 is a flowchart illustrating a flow of the onset location identification process (step S4 illustrated in Fig. 6) in the present embodiment.

Prior to execution of the onset lotion determination process, the control unit of the anomaly identification apparatus 100 stores device information regarding each of facility devices included in the air conditioning system 1 in an auxiliary storage device 103 (may be referred to as a "storage unit" hereinafter). The device information is stored in database, in which identification information for identifying each facility device, a name representing each of the facility devices, a communication address assigned to each of the facility devices, and the like are associated with one another.

The control unit of the anomaly identification apparatus 100 can store construction information used for identifying an onset location. The construction information is drawing information regarding construction of a site where the air conditioning system 1 is installed. The construction information is, for example, acquired from a building information modeling (BIM) system, and the acquired construction information may be stored in the storage unit of the anomaly identification apparatus 100 in advance.

The construction information includes wiring information representing wiring between the facility devices included in the air conditioning system 1, system information representing a system of the facility devices, and drawing information of a facility in which the air conditioning system 1 is installed. The drawing information indicates installation location of the facility devices included in the air conditioning system 1 and a power supply system installed in the facility.

The control unit of the anomaly identification apparatus 100 can highly accurately identify an onset location of a communication anomaly by using the construction information. However, it is not necessary to use the construction information, and the construction information to be used can be optionally selected by a user.

At step S4-1, the control unit of the anomaly identification apparatus 100 determines whether or not the wiring information of the facility devices is known. Whether or not the wiring information is known is determined by whether or not the wiring information of the air conditioning system 1 is stored in the storage unit of the anomaly identification apparatus 100. In the case where the wiring information is not known (YES), the control unit advances the process to step S4-2. In the case where the wiring information is known (NO), the control unit skips step S4-2, and advances the process to step S4-3.

At step S4-2, the control unit of the anomaly identification apparatus 100 applies virtual wiring to the air conditioning system 1 based on an anomaly degree of each of the facility devices. The virtual wiring is virtual wiring information in which a wiring configuration is assumed by estimating the connection between the facility devices. First, the control unit assigns branch numbers to child nodes in ascending order of the anomaly degree. Next, the control unit assumes that the child nodes are connected by bus wiring, and sets wiring of the child nodes.

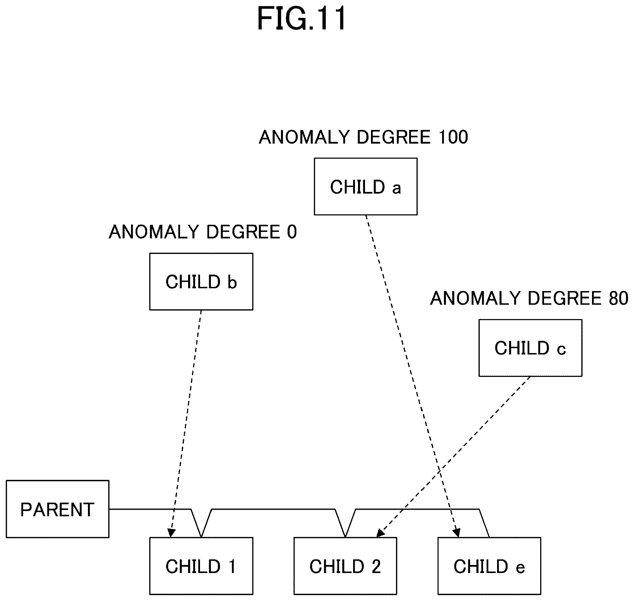

Fig. 11 is a diagram illustrating an example of the virtual wiring. As illustrated in Fig. 11, it is assumed that there are three child nodes a to c whose wiring is unknown. An anomaly degree of the child node a is 100, an anomaly degree of the child node b is 0, and an anomaly degree of the child node c is 80. Accordingly, the child node b is assigned as the child node 1, the child node c is assigned as the child node 2, and the child node a is assigned as the child node e. Then, the child nodes 1 to e are connected by bus wiring in the order of the branch numbers. Thus, virtual wiring information is generated.

The description will be made with referring back to Fig. 10. At step S4-3, the control unit of the anomaly identification apparatus 100 determines a power loss rule. The power loss rule is a rule for identifying a power supply system n as an onset location when a communication anomaly occurs at the child node n (n = 1, 2, ..., e). When the power loss rule is determined, the drawing information stored in advance as the construction information can be used.

Each of the facility devices may periodically transmits power supply information representing on or off of the power supply. The control unit of the anomaly identification apparatus 100 can use the power supply information acquired from each of the facility device for the determination of the power loss rule. In the case where a communication anomaly occurs at the facility device that receives the power supply information representing power-off, it can be confirmed that the power supply system to which the facility device assigned is an onset location.

At step S4-4, the control unit of the anomaly identification apparatus 100 determines a device failure rule. The device failure rule is a rule for identifying a child node n, when a communication anomaly occurs at the child node n.

At step S4-5, the control unit of the anomaly identification apparatus 100 determines a wiring failure rule. The wiring failure rule is a rule for identifying a line n as an onset location when a communication anomaly occurs at the child nodes n to e and no communication anomaly occurs at a child node n-1 that is one node upstream of the child node n.

In the case where no communication anomaly occurs at the child node e, it is determined according to the wiring failure rule that no wiring failure has occurred in the system. In the case where a communication anomaly occurs at the parent node and all of the child nodes, it is determined according to the wiring failure rule that no wiring failure has occurred within the system. This is because, in this case, it is highly possible that an onset location is upstream of the parent node.

In the case where a communication anomaly occurs at the parent node and all of the child nodes, it is also possible that the parent node is an onset location. However, if there is a line that is determined as an onset location upstream of the parent node, it is highly possible that the line has caused the communication anomaly.

At step S4-6, the control unit of the anomaly identification apparatus 100 identifies an onset location of the communication anomaly based on the determination results obtained at step S4-3 to step S4-5. In the case where the onset locations overlap in the determination results, the wiring failure rule is prioritized. This is because it is very unlikely that device failures simultaneously occur at multiple facility devices.

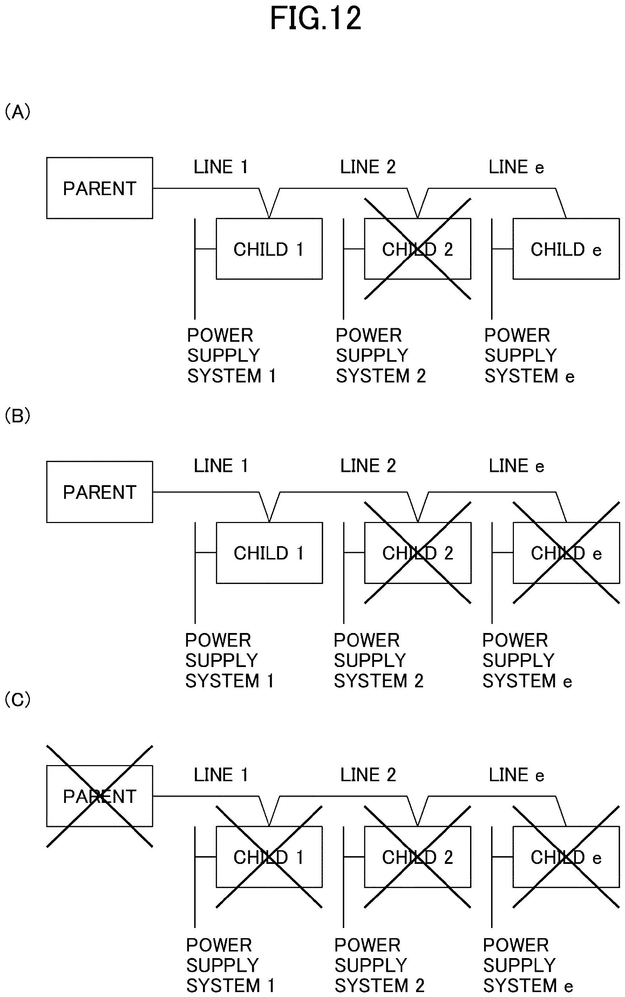

A relationship between the communication anomaly pattern and the onset location will be specifically described with reference to Fig. 12. Fig. 12 is a conceptual diagram illustrating an example of the communication anomaly pattern. Fig. 12 illustrates that a communication anomaly occurs at a device indicated with a mark ×.

Fig. 12(A) is a conceptual diagram illustrating an example of a communication anomaly pattern when a communication anomaly occurs at one child node. In the example illustrated in Fig. 12(A), a communication anomaly occurs only at the child node 2. In this case, the child node 2 is determined as an onset location according to the device failure rule.

Fig. 12(B) is a conceptual diagram illustrating a communication anomaly pattern when a communication anomaly occurs at multiple child nodes. In the example illustrated in Fig. 12(B), a communication anomaly occurs at the child node 2 and the child node e. In this case, the line 2 is identified as an onset location according to the wiring failure rule.

Fig. 12(C) is a conceptual diagram illustrating an example of a communication anomaly pattern when a communication anomaly occurs at the parent node and all of the child nodes. In the example illustrated in Fig. 12(C), a communication anomaly occurs at the parent node and the child nodes 1 to e. In this case, a system upstream of the parent node is identified as an onset location.

In the onset location identification process illustrated in Fig. 10, the power loss rule at step S4-3, the device failure rule at step S4-4, and the wiring failure rule at step S4-5 are determined in this order, but the above rules may be determined in any order, and two or more rules may be determined in parallel. Moreover, not all the rules may be determined, and any one or two of the rules may be determined.

The description will be made with referring back to Fig. 6. At step S5, the control unit of the anomaly identification apparatus 100 outputs information regarding the communication anomaly. The information regarding the communication anomaly includes the onset location of the communication anomaly. The information regarding the communication anomaly may include information regarding wiring (virtual wiring when wiring is unknown), communication frequency information of each of the facility devices, and an anomaly degree of each of the facility devices.

The control unit of the anomaly identification apparatus 100 may display the information regarding the communication anomaly on a display device 105 (may be referred to as a "display unit" hereinafter). The control unit displays a screen displaying, for example, at least one content selected from the group consisting of a name of an onset location, identification information of the onset location, drawing information displaying the onset location prominently, communication frequency information of each of communication facility devices, an anomaly degree of each of facility devices, and the like, on the display unit. For the name, the identification information, drawing information, and the like to be displayed on the screen, the device information stored in the storage unit in advance is used.

The control unit may transmit the information regarding the communication anomaly to a user terminal used by a user. In the user terminal, a screen displaying the information regarding the communication anomaly is displayed on a display device. The information displayed on the screen is identical to that displayed on the display unit of the anomaly identification apparatus 100.

### <Summary>

As described above, according to each of the embodiments of the present disclosure, it is possible to improve the accuracy of identifying a communication anomaly in the communication system. For example, in the technology of the related art disclosed in Patent Document 1, all facility devices with a reduced communication frequency are identified as onset locations of the communication anomaly without distinguishing between them, and therefore there is a problem such that the accuracy of identifying the onset location is low.

Conversely, the anomaly identification apparatus according to each of the embodiments of the present disclosure acquires communication frequency information representing a communication frequency for each of the facility devices, and estimates an onset location of a communication anomaly at the facility device according to a pattern of the communication frequency. According to each of the embodiments of the present disclosure, therefore, the accuracy of identifying a communication anomaly in the communication system can be improved.

Although the embodiments have been described, it will be understood that various changes in form and detail can be made therein without departing from the spirit and scope of the claims.

This application claims priority to Japanese Patent Application No. 2022-60523 filed on March 31, 2022 in the Japan Patent Office, the entire contents of which are incorporated herein by reference.

### Reference Signs List

- 1: air conditioning system
- 10: monitoring device
- 20: outdoor unit
- 30: indoor unit
- 100: anomaly identification apparatus

## Claims

1. An anomaly identification apparatus, comprising:
a control unit monitoring communication that facility devices perform, the control unit being configured to
acquire, for each of the facility devices, communication frequency information representing a communication frequency, and
estimate an onset location of a communication anomaly among the facility devices according to a pattern of the communication frequency.

2. The anomaly identification apparatus according to claim 1,
wherein the communication frequency information includes a number of times the communication has succeeded, a number of times the communication has failed, or a number of times the communication has been retransmitted.

3. The anomaly identification apparatus according to claim 1,
wherein the control unit is configured to
determine, for each of the facility devices, the communication anomaly according to a degree of change in the communication frequency, and
estimate the onset location according to the pattern of the facility device at which the communication anomaly has occurred.

4. The anomaly identification apparatus according to claim 3,
wherein the control unit is configured to
determine the communication anomaly based on the degree of change in the communication frequency and a duration of the change in the communication frequency.

5. The anomaly identification apparatus according to claim 3,
wherein the control unit is configured to
determine the communication anomaly based on an occurrence frequency of the communication anomaly.

6. The anomaly identification apparatus according to claim 1, further comprising:
a storage unit that stores wiring information of the facility devices,
wherein the control unit is configured to
estimate the onset location based on the wiring information.

7. The anomaly identification apparatus according to claim 1,
wherein the control unit is configured to
acquire, for each of the facility devices, supply information of a power supply, and
estimate the onset location based on the supply information.

8. The anomaly identification apparatus according to claim 7,
wherein the supply information includes information regarding power loss.

9. The anomaly identification apparatus according to claim 1,
wherein the control unit is configured to
acquire drawing information regarding construction of a site where the facility devices are installed, and
estimate the onset location based on the drawing information.

10. The anomaly identification apparatus according to claim 1, further comprising:
a display unit that displays a name of the onset location, identification information of the onset location, drawing information, in which the onset location is displayed prominently, or communication frequency information.

11. The anomaly identification apparatus according to claim 1,
wherein one of the facility devices communicates with another one of the facility devices at set cycles.

12. The anomaly identification apparatus according to claim 1,
wherein the facility devices include one or more facility devices that cannot directly communicate with the anomaly identification apparatus.

13. The anomaly identification apparatus according to claim 1,
wherein the onset location in an air conditioning system is estimated, the air conditioning system including an air conditioner and a monitoring device monitoring the air conditioner, the air conditioner including one or more outdoor units and one or more indoor units.

14. The anomaly identification apparatus according to claim 13,
wherein the control unit is configured to
estimate the onset location in wiring connecting the one or more outdoor units, the one or more indoor units, and the monitoring device.

15. The anomaly identification apparatus according to claim 14,
wherein the one or more indoor units cannot directly communicate with the anomaly identification apparatus.

16. The anomaly identification apparatus according to claim 13, further comprising:
a storage unit that stores system information of the one or more outdoor units and the one or more indoor units,
wherein the onset location is estimated based on the system information.

17. The anomaly identification apparatus according to claim 13,
wherein the communication frequency information represents the communication frequency between the one or more outdoor units and the one or more indoor units.

18. The anomaly identification apparatus according to claim 13,
wherein the communication frequency information represents the communication frequency between the one or more outdoor units and the monitoring device.

19. An anomaly identification method, comprising:
causing a control unit, which is included in an anomaly identification apparatus and monitors communication that facility devices perform, to execute
a process of acquiring, for each of the facility devices, communication frequency information representing a communication frequency, and
a process of estimating an onset location of a communication anomaly among the facility devices according to a pattern of the communication frequency.

20. A program for causing a control unit, which is included in an anomaly identification apparatus and monitors communication facility devices perform, to execute:
a process of acquiring, for each of the facility devices, communication frequency information representing a communication frequency; and
a process of estimating an onset location of a communication anomaly among the facility devices according to a pattern of the communication frequency.
